Europäisches Patentamt

European Patent Office

Office européen des brevets

(19)

(11) Publication number: **0 291 097 B1**

# (12) EUROPEAN PATENT SPECIFICATION

(45) Date of publication of patent specification: **04.12.91**

(51) Int. Cl.⁵: **B01J 2/14**, B01J 2/00,
C07D 251/36

(21) Application number: **88107823.2**

(22) Date of filing: **16.05.88**

The file contains technical information submitted after the application was filed and not included in this specification

(54) Method of preparing spherical granules and tablets of a solid chlorinating agent.

(30) Priority: **15.05.87 JP 119584/87**
**29.05.87 JP 133832/87**

(43) Date of publication of application:
**17.11.88 Bulletin 88/46**

(45) Publication of the grant of the patent:
**04.12.91 Bulletin 91/49**

(84) Designated Contracting States:
**CH DE ES FR GB LI NL**

(56) References cited:
**EP-A- 0 183 665**
**DE-A- 1 667 038**
**US-A- 3 579 719**
**US-A- 4 296 051**

(73) Proprietor: **NISSAN CHEMICAL INDUSTRIES
LTD.**
**3-7-1, Kanda Nishiki-cho
Chiyoda-ku Tokyo(JP)**

(72) Inventor: **Ota, Masanori, c/o Nissan Chemical
Ind.Ltd.**
**Central Research Institute, 772-1, Tsuboi-cho
Funabashi-shi, Chiba-ken(JP)**

Inventor: **Aoki, Masafumi, c/o Nissan Chemical Ind.Ltd.**
**Central Research Institute, 772-1,Tsuboi-cho
Funabashi-shi, Chiba-ken(JP)**
Inventor: **Nakamura, Masashi, c/o Nissan
Chemical Ind.Ltd.**
**Central Research Institute, 772-1,Tsuboi-cho
Funabashi-shi, Chiba-ken(JP)**
Inventor: **Murakami, Takashi, c/o Nissan
Chemical Ind.Ltd.**
**Toyama Factory, 635, Sasakura, Fuchu-machi
Nei-gun, Toyama-ken(JP)**

(74) Representative: **Hansen, Bernd, Dr.rer.nat. et
al**
**Hoffmann, Eitle & Partner Patentanwälte Ar-
abellastrasse 4 Postfach 81 04 20
W-8000 München 81(DE)**

## Description

BACKGROUND OF THE INVENTION

The present invention relates to a method of preparing spherical granules having a particle size of 0.2 to 5 mm and tablets of solid chlorinating agents having low bulk density, and having a rapid solubility.

High grade bleaching powders, chlorinated isocyanuric acid compounds, etc., have been used as solid chlorinating agents for sterilization, cleaning or bleaching in various fields. For example, as germicides, sterilizers and disinfectants, solid chlorinating agents are used as germicides and sterilizers of tap water, sewerage, pool water, etc. or as sterilizers, germicides and cleaners for dishes, cooking facilities, cooking equipments, etc. In addition, solid chlorinating agents are also used for sterilization, bleaching, etc. of fibers.

Commercially available forms of solid chlorinating agents include powders, granules and tablets. Powders can be difficult to handle and therefore, granules or tablets are used more than powders. Solid chlorinating agents are poorly stable in a wet state so that there is adopted a method of preventing solid chlorinating agents from decomposition in which the reaction product slurry formed from the reaction system is generally dehydrated to produce a wet cake and the produced wet cake is immediately dried so as to form powder, during its preparation steps.

As the chlorinated isocyanuric acid compounds, there are known trichloroisocyanuric acid, dichloroisocyanuric acid, an anhydride or hydrate of sodium dichloroisocyanurate and potassium dichloroisocyanurate.

As methods for preparing granules of solid chlorinating agents, the following are known for chlorinated isocyanuric acid compounds. The methods are almost the same in the case of high grade bleaching powders. There have been proposed:

(1) a method which comprises tabletting powders of chlorinated isocyanuric acid and grinding the tablets into granules (Japanese Patent Publication No. 23198/67);

(2) a method which comprises compressing powders on a two-roll mill to mold into a plate-like shape, and grinding it into granules (Japanese Patent Laid-open Publication Application No. 125381/74 [corresponding to U.S. Patent No. 3,886,249] and U.S. Patent No. 3,985,774);

(3) a method which comprises extrusion granulating a wet cake into a fine noodle-like shape, fluidized drying the extrusion granulated product, molding the dried product into a plate-like shape using a two-roll mill, grinding and sieving to obtain granules having a low bulk density (Japanese Patent Laid-open Publication No. 57576/80 corresponding to U.S. Patent No. 4,296,051); and

(4) a method which comprises spray granulating sodium dichloroisocyanurate to obtain granules of aqueous solution or slurry containing anhydrides or hydrates of alkali metal dichloroisocyanurate, in particular, dihydrate of sodium dichloroisocyanurate (U.S. Patents Nos. 4,005,087 and 4,182,871).

There is known a method for preparing tablets of solid chlorinating agents which comprises tabletting powders of solid chlorinating agents. Also known is a method which comprises tabletting granules obtained by the method of (3) described above (Japanese Patent Laid-open Publication Nos. 62011/80 [corresponding to U.S. Patent No. 4,261,942] and 203009/82). In order to improve solubility of tablets, various proposals have been made. For example, in Japanese Patent Laid-open Publication Nos. 139628/76 and 160730/79, there is proposed the disintegration and dispersion of tablets in water immediately after charging water, by formulating disintegrators into tablets mainly composed of trichloroisocyanuric acid having low solubility.

Further even though solid chlorinating agents are as highly soluble as high grade bleaching powders or alkali metal salts of dichloroisocyanuric acid, when the chlorinating agents are used in tablet form, a period of about 1 to 2 hours is required for dissolving the tablet-formed chlorinating agent at for example the bottom of a pool where mobility of water is low.

As a method for dissolving tablets of alkali metal salts of dichloroisocyanuric acid more rapidly, there is proposed in Japanese Patent Laid-open Publication No. 142210/81 a method which comprises formulating alkali metal carbonates or bicarbonates and solid organic acids into alkali metal salts of dichloroisocyanuric acid, generating carbon dioxide gas in water and dissolving the tablets more rapidly by carbon dioxide's foaming power. However, the tablets comprising formulating the carbonates or bicarbonates and solid organic acids especially tend to suffer from moisture so that the tablets retain water in the formulated substance and from outside air, whereby water reacts to evolve carbon dioxide gas. Accordingly, it is necessary to limit raw materials, preparation conditions and packaging materials thereby to get rid of water. This makes poor practicability for use in a pool or business use.

In addition, it is difficult to continuously tablet solid chlorinating agents without mold release agents. In particular, even though mold release agents are used, it is difficult to continuously tablet anhydrides of sodium dichloroisocyanurate and potassium dichloroisocyanurate into tablets having a diameter of 20 mm or more and a mass of 10 g or more.

The aforesaid method (1) of the prior art is economically disadvantageous and provides poor practicability because powdery chlorinated isocyanuric acid compounds stick to a mold and tends to cause troubles such as binding, sticking, capping, etc. The method (2) is a dry granulation method, but granules obtained by this method have a large bulk density and are hard so that dissolution tends to be slow. The method (3) is a method in which a wet cake prior to the step of drying and powdering is subjected to wet granulation for extruding granulation into a fine noodle-like shape; the extruding granulated product is fluidizedly dried, the dried product is molded into a plate-like shape using a two-roll mill and then, the product is ground and sieved to produce granules having a low density (dry granulation). However, in this method (3), cylindrical granules molded into a fine noodle-like shape are broken into powder. Further, particularly even when an extrusion pressure or a screen mesh size is controlled or even though a binder is added, granules are powdered by fluidized drying. Furthermore even by vacuum drying or stationary drying with an electric dryer, etc. in order to prevent granules from being powdered upon fluidized drying, the strength of fine noodle-like or cylindrical moldings is extremely weak and there is no change in the tendency to powder. In general, drying of powders requires a long period of time with stationary drying and lacks practicability. For these reasons, fluidized drying has been adopted. The method (4) is to prepare anhydrides or hydrates of alkali metal dichloroisocyanurate, in particular, dihydrate of sodium dichloroisocyanurate. However, the method adopting spray granulation and drying the aqueous solution or slurry containing sodium dichloroisocyanuric acid not only require large quantities of calories to evaporate large amounts of water but also tend to cause troubles such as clotting, abrasion, corrosion, etc. of a spray nozzle. Further the granules obtained by this method are semi-dried granules bound to each other, namely, aggregates of secondary granules, and the obtained granules still tend to be powdered.

DE-A-1667038 discloses an apparatus for making spherical granules directly from wet granules in a cylindrical form previously formed by e.g. a screw-type extruder.

## SUMMARY OF THE INVENTION

In order to solve the prior art problems described above, namely, the problems in stability of solid chlorinating agents, powdering in the preparation of granules and slow solubility of granules and tablets of the obtained solid chlorinating agents, stability of the solid chlorinating agents has been evaluated and various methods of granulation have been further investigated. As a result, the present inventors have unexpectedly found that when a wet cake is granulated by granulating into spherical granules with a tumbling granulator or a spheronizing granulator after it is extruding granulated, spherical granules which are strong, free from being powdered in transportation upon granulation, drying and using, etc. and are rapid in solubility can be obtained. Further by tabletting the granules obtained by the method of the present invention, it has been found that solubility of the tablets is extremely high and troubles upon tabletting using a single or rotary tabletting machine are eliminated, as compared to conventional tablets obtained by tabletting granules which are prepared by the conventional dry method comprising molding conventional dry powders into a plate-like shape by a two-roll mill, powdering and sieving steps.

An object of the present invention is to provide a method of preparing granules and tablets of a solid chlorinating agent which are free from being powdered during a granulation step of the solid chlorinating agent into granules and upon the drying step and transportation of granules.

## DESCRIPTION OF THE PREFERRED EMBODIMENTS

The present invention provides, in a method of preparing spherical granules of a solid chlorinating agent from a wet cake obtained in the preparation step of a solid chlorinating agent, the method of preparing spherical granules of a solid chlorinating agent which comprises steps of:

(a) granulating the cake in a wet state to cylindrical granules having a diameter of 0.2 to 5 mm by extruding granulation; then,
(b) granulating the cylindrical granules to spherical granules having a particle size of 0.2 to 5 mm with a tumbling granulator or a spheronizing granulator; and,
(c) drying the granules;

and a method of preparing tablets of the solid chlorinating agent which comprises tabletting the granules obtained by the method described above. Hereafter the present invention will be described in detail.

High grade bleaching powders and chlorianted isocyanuric acid compounds are used as the solid chlorinating agent in the present invention. The chlorinated isocyanuric acid compounds are at least one

3

compound selected from trichloroisocyanuric acid, dichloroisocyanuric acid, an anhydride or hydrate of sodium dichloroisocyanurate and potasium dichloroisocyanurate, etc. The raw material used in the present invention is a cake in a wet state which is obtained by dehydration separation from the slurry obtained in the steps of preparing solid chlorinating agents conventionally performed in an industrial scale. The water content of this wet cake is generally in a range of 10 to 40 wt%.

In the method of the present invention, the granules are granulated into a spherical shape after extruding granulation. In this case, direct granulation of the wet cake as described above gives non-uniform masses. Further drying of such granulated masses results in powdering. However, in the case that the wet cake is extruding granulated and then granulated into a spherical shape, spherical granules which are strong and free from powdering and are hardly powdered even in the subsequent drying step or upon transportation of the granules can be obtained. The obtained granules are spheres having a preferred appearance and a uniform particle size, have a high free fluidity and provide a rapid solubility.

The particle size of the spherical granules of solid chlorinating agents obtained by the method of the present invention varies depending upon the size of pores of an extruding granulator used in extruding granulation. A preferred particle size of the spherical granules is 0.2 to 5 mm, and more preferably 0.4 to 2 mm. Accordingly, the size of the pores of an extruding granulator used is 0.2 to 5 mm, preferably 0.4 to 2 mm. When thus obtained cylindrical moldings having a diameter of 0.2 to 5 mm, preferably 0.4 to 2 mm and having a length of, preferably, one to three times said diameter, in a wet state obtained by this extruding granulation are granulated with a tumbling granulator or a spheronizing granulator, the objective spherical granules can be obtained.

As an extruding granulator is used a screw-type extruding granulator, a roll-type extruding granulator, a blade-type extruding granulator, etc. It is preferable to use a screw-type extruding granulator.

Further as a granulator for granulating into a spherical shape, there are a tumbling granulator or a spheronizing granulator. As the tumbling granulator, a drum granulator and a pan granulator are preferable. The spheronizing granulator is commercially available under the name of Marumerizer. This is a machine for spheronizing wet granules on a grooved plate rotating horizontally by a centrifugal force and a frictional force due to unevenness on the plate and having a mechanism of spheronizing the granules by rotating while twisting like threads of a rope in a donut-like shape along the inside wall of a casing.

The thus spheronized granules are dried. For drying, fluidized drying is preferable.

In the case of preparing dichloroisocyanuric acid dihydrate, it is necessary to conduct the drying in the temperature range of 45 to 55°C so as not to cause release of crystalline water. With respect to other solid chlorinating agents, however, the drying may be conducted at temperatures higher than 45 to 55°C. In this case, a preferred temperature is 70 to 110°C. It is desired that free water in the solid chlorinating agent be 2% or less in the drying.

The bulk density of the thus obtained spherical granules of solid chlorinating agents somewhat varies depending upon solid chlorinating agents. The bulk density is 0.5 to 0.9 g/cm³ in chlorinated isocyanuric acid compounds and 0.7 to 1.0 g/cm³ in high grade bleaching powders, said bulk densities being lower than those of the granules obtained by the dry granulation method.

The surface hardness of the granules obtained by the method of the present invention is high, but the inside of the granules is porous. For this reason, the bulk density is high, no powdering occurs and solubility in water becomes markedly rapid, as compared to the granules obtained by dry granulation method. In addition, the granules are spherical so that fluidity of the granules is high to make handling in transportation, measuring, etc. extremely easy.

It is a preferred embodiment that upon granulation, ordinarily used binders are added in order to improve hardness of the granules, and lubricants such as stearates, orthoborates, etc. are added to reduce friction in extrusion molding.

Further, upon molding into spherical granules by a tumbling granulator or a spheronizing granulator, dyes, flavors or coating agents, may be incorporated, whereby colored, flavored, coated or multilayered granules can be obtained.

In order to tablet the spherical granules obtained by the method described above, the granules can be tabletted using a single tabletting machine or a rotary tabletting machine, etc. conventionally used. When the spherical granules are obtained by the method of the present invention are used, the raw materials can be supplied extremely smoothly and quantatively. Further, even though tabletting is carried out continuously, there occurs no trouble such as a capping phenomenon, etc. Therefore, continuous tabletting can be performed in such a state that the surface density, hardness, etc. of the obtained tablets are always stable. In particular, anhydrides of sodium dichloroisocyanurate and potassium dichloroisocyanurate among the solid chlorinating agents have been hitherto difficult to continuously tablet even though auxiliary agents such as mold release agents, etc. are used, but according to the method of the present invention, continuous tabletting can be made easily.

In addition, the tablets of the present invention have an extremely high solubility, as compared to the case of tablets obtained using the granules obtained by conventional drying method.

Upon tabletting, there may be incorporated stearates, orthoborates, talc, etc. which are conventionally used as mold release agents for spherical granules. Further if necessary, inorganic builders, surface active agents, foaming agents, etc. may also be formulated upon this tabletting.

Hereafter the present invention will be described in detail with reference to the examples but the technical scope of the present invention is not deemed to be limited thereto.

Example 1 (Preparation of spherical granules of sodium dichloroisocyanurate)

Sodium dichloroisocyanurate having a water content of 21.6 wt% in a wet state was granulated at a granulation rate of 50 to 60 kg/hour using an extruding granulator (manufactured by Fuji Paudal Co., Ltd., Pelletable EXD-60; this device was also used in the following examples and comparative examples.) to give about 20 kg of wet cylindrical granules having a diameter of 1.0 mmØ and a length of 2 to 5 mm. In a spheronizing machine (manufactured by Fuji Paudal Co., Ltd., Marumerizer Q-230; this device was also used in the following examples and comparative examples.), 0.5 kg each of the cylindrical granules were charged to give wet spherical granules having a particle size of 1.0 to 1.8 mmØ in about 2 minutes. The wet spherical granules were cahrged in a fluidized dryer (manufactured by Fuji Paudal Co., Ltd., Mizet Drier MD-A-200; this device was also used in the following examples and comparative examples.) at 0.8 kg each time for 5 to 15 minutes. Hot air was blown to dry the spherical granules at 85 to 95°C at an inlet.

The end point of drying was at such point that the temperature of exhaust gas began to rapidly increase. When the water content of the spherical granules is high, the temperature of outlet exhaust gas was 30 to 40°C. In this case, powdering hardly occurred upon drying. Thus, spherical granules of sodium dichloroisocyanurate having a water content of 0.7 wt%, a bulk density of 0.69 g/cm³ and a particle size of 1.0 to 1.8 mmØ were obtained.

Example 2 (Preparation of spherical granules of sodium dichloroisocyanurate)

Using the same raw material as used in Example 1, procedures were performed in a manner similar to Example 1 except that the diameter was made 2.0 mmØ in the extruding granulation and cylindrical granules having a length of 3.5 to 7 mm were prepared. Little powering occurred upon fluidized drying. Spherical granules of sodium dichloroisocyanurate having a water content of 0.5 wt%, a bulk density of 0.67 g/cm³ and a particle size of 2.0 to 3.4 mmØ were obtained.

Example 3 (Preparation of spherical granules of sodium dichloroisocyanurate)

Procedures were performed in a manner similar to Example 1 except that wet sodium dichloroisocyanurate having a water content of 26.4 wt% was used as a raw material. Little powdering occurred upon fluidized drying. Spherical granules of sodium dichloroisocyanurate having a water content of 0.7 wt%, a bulk density of 0.67 g/cm³ and a particle size of 1.0 to 1.7 mmØ were obtained.

Comparative Example 1

Wet cylindrical granules having a diameter of 1.0 mmØ and a length of 2 to 5 mm obtained using the extruding granulator used in Example 1 were dried at an inlet temperature of 85 to 95°C directly with an air flow without performing granulation with a spheronizing granulator but almost all were powdered.

Comparative Example 2

The raw material used in Example 1 was directly granulated with a spheronizing granulator without performing extruding granulation. The granules were adhered to the wall surface and bottom surface of the spheronizing granulator and, only non-uniform granules were obtained in a mass state of 2 to 50 mm. Further drying was conducted at an inlet temperature of 85 to 95°C but almost all were powdered.

Example 4 (Preparation of spherical granules of sodium dichloroisocyanurate dihydrate)

Using the same raw material as used in Example 1, procedures were performed in a manner similar to Example 1 except that the inlet gas temperature upon fluidized drying was made 45 to 55°C. Little powdering occurred upon fluidized drying. Spherical granules of sodium dichloroisocyanurate dihydrate having a bulk density of 0.78 g/cm$^3$ and a particle size of 1.0 to 1.7 mmø were obtained. The water content was 13.9 wt% including crystalline water.

Example 5 (Preparation of spherical granules of sodium dichloroisocyanurate dihydrate)

Procedures were performed in a manner similar to Example 4 except that cylindrical granules having a diameter of 2.0 mmø and a length of 3.5 to 7 mm were prepared. Little powdering occurred upon fluidized drying. Spherical granules of sodium dichloroisocyanurate dihydrate having a bulk density of 0.77 g/cm$^3$ and a particle size of 2.0 to 3.4 mmø were obtained. The water content was 13.5 wt% including crystalline water.

Comparative Example 4

The cylindrical granules obtained in Example 4 were directly subjected to fluidized drying at an inlet temperature of 45 to 55°C as they are, without performing granulation using a spheronizing granulator to try to obtain granules of dichloroisocyanuric acid dihydrate. However, almost all were powdered.

Example 6 (Preparation of spherical granules of trichloroisocyanuric acid)

Procedures were performed in a manner similar to Example 1 except that wet trichloroisocyanuric acid having a water content of 15.2 wt% was used. Little powdering occurred upon fluidized drying. Spherical granules of trichloroisocyanuric acid having a bulk density of 0.85 g/cm$^3$, a water content of 0.3 wt% and a particle size of 1.0 to 1.7 mmø were obtained.

Example 7 (Preparation of spherical granules of potassium dichloroisocyanurate)

Procedures were performed in a manner similar to Example 1 except that wet potassium dichloroisocyanurate having a water content of 20.7 wt% was used. Little powdering occurred upon fluidized drying. Spherical granules of potassium dichloroisocyanurate having a bulk density of 0.79 g/cm$^3$, a water content of 0.4 wt% and a particle size of 1.0 to 1.7 mmø were obtained.

Example 8 (Preparation of spherical granules of high grade bleaching powders)

Procedures were performed in a manner similar to Example 1 except that wet high grade bleaching powders having a water content of 22.4 wt% was used. Little powdering occurred upon fluidized drying. Spherical granules of high grade bleaching powders having a bulk density of 0.85 g/cm$^3$, a water content of 1.7 wt% and a particle size of 1.0 to 1.7 mmø were obtained.

Comparative Examples 6 and 7

The cylindrical granules obtained in Examples 6, 7 and 8 were subjected directly to fluidized drying at an inlet temperature of 85 to 95°C as they are, without performing granulation but almost all were powdered.

Comparative Examples 8 through 10

The wet cakes used in Examples 6, 7 and 8 were granulated with a spheronizing granulator without performing granulation. The granules were adhered to the wall surface and bottom surface of the spheronizing granulator as in Comparative Example 2 and, non-uniform granules were only obtained in a mass state of 2 to 50 mm. Further drying was conducted at an inlet temperature of 85 to 95°C but almost all were powdered.

Evaluation of solubility of granules

(a) Preparation of granules for measurement of solubility

For purpose of comparison, granules by the dry method were prepared as follows.

Sodium dichloroisocyanurate powders (passed through 150 mesh) having a water content of 1.4 wt% were molded into a plate-like molding having a width of 60 mm and a thickness of 1.5 mm, with a roller compactor having a roll rotating number of 15 times/min., a hydraulic pressure of 75 kg/cm² (7.35 MPa), a compression pressure (linear pressure) of 1.5 tons/cm and a granulation rate of 90 kg/hour. The molding was further pulverized and granulated through a sieve to give granules of 990 to 1400μm.

In a similar manner, granules of dichloroisocyanuric acid dihydrate, trichloroisocyanuric acid, potassium dichloroisocyanurate and high grade bleaching powders were also obtained by the dry method.

The thus obtained granules and spherical granules obtained in the examples were classified through a sieve passing 12 mesh (1400μm) but stopping at 16 mesh 990μm) to adjust particle size. These granules were made samples for measurement of solubility.

(b) Method of evaluating solubility

0.5 g of each of the granules shown in Table 1 was accurately weighed and added to 1 liter of distilled water. The mixture was stirred with a constant rate stirrer. Water was collected with a water collector equipped with a filter every time period shown in Table 1 and an effective chlorine concentration was measured by iodometry. The solubility was determined by this measurement value and a theoretical value of the effective chloride upon complete dissolution. The results are shown in Table 1.

As shown in Table 1, the granules of solid chlorinating agent obtained by the method of the present invention have a solubility greater than the granules of solid chlorinating agent obtained by the conventional dry method.

7

Table 1

| Granule | Solid Chlorinating Agent | Bulk Density (g/cm³) | Water Content (%) | Solubility (%) | | | | | | |
|---|---|---|---|---|---|---|---|---|---|---|
| | | | | 1 min | 2 mins | 3 mins | 5 mins | 10 mins | 20 mins | 30 mins |
| Example | | | | | | | | | | |
| 1 | DCCNa | 0.69 | 0.7 | 98 | 100 | - | - | - | - | - |
| 4 | DCCNa.2H₂O | 0.78 | 13.9 | 98 | 100 | - | - | - | - | - |
| 6 | TCCA | 0.85 | 0.3 | 9 | 16 | 22 | 36 | 55 | 82 | 94 |
| 7 | DCCK | 0.79 | 0.4 | 80 | 95 | 100 | - | - | - | - |
| 8 | High bleaching powder | 0.85 | 1.7 | 60 | 71 | 85 | 99 | 100 | - | - |
| Comparative Examples | | | | | | | | | | |
| Granules by the drying method: | | | | | | | | | | |
| | DCCNa | 0.89 | 1.4 | 70 | 94 | 100 | - | - | - | - |
| | DCCNa.2H₂O | 0.92 | 14.5 | 63 | 90 | 100 | - | - | - | - |
| | TCCA | 0.99 | 0.8 | 3 | 5 | 6 | 11 | 20 | 34 | 44 |
| | DCCK | 0.94 | 0.6 | 45 | 65 | 78 | 95 | 100 | - | - |
| | High bleaching powder | 1.04 | 1.5 | 23 | 39 | 52 | 69 | 94 | 100 | - |

DCCNa:      sodium dichloroisocyanurate

DCCNa.2H₂O:      sodium dichloroisocyanurate dihydrate

TCCA:      trichloroisocyanuric acid

DCCK:      potassium dichloroisocyanurate

Example 9 (Tabletting of sodium dichloroisocyanurate)

Ten kilograms of a mixture of the spherical granules obtained in Example 1 and 0.2 wt% of sodium stearate (mold release agent) were continuously molded into tablets having a diameter of 30 mm, a thickness of 11 to 15 mm and a weight of 20 g by a rotary tabletting machine. For evaluation of tabletting properties, damages at the periphery or scratches of the tablets in the side and surface were observed by squeak generated upon release of tablets from a mold (mortar) in tabletting and outer appearance of the tablets obtained. As the result, normal tablets which were free from squeak, collapsed portions at the periphery of tablets and scratches at the side and surface of the tablets and have almost constant density, hardness, etc. of the tablets from the initiation to the end of continuous tabletting.

Comparative Example 11 (Tabletting of sodium dichloroisocyanurate granules obtained by the dry method)

Sodium dichloroisocyanurate powders (passed through 150 mesh) having a water content of 0.6 wt% were molded into a plate-like molding having a width of 60 mm and a thickness of 1.5 mm, with a roller compactor having a roll rotating number of 15 times/min., a hydraulic pressure of 75 kg/cm$^2$, a compression pressure (linear pressure) of 1.5 tons/cm and a granulation rate of 90 kg/hour. The molding was further pulverized and granulated through a sieve to give granules of 990 to 1400 μm. Ten kilograms of a mixture of the spherical granules thus obtained and 0.2 wt% of sodium stearate (mold release agent) were tabletted in a manner similar to Example 1. Squeak was noisy upon release of the tablets from a mold (mortar) in tabletting and when outer appearance of the obtained tablets was observed, the tablets had many collapsed portions at the periphery and many vertical scratches on the side. Continuous tabletting resulted in increasing the collapsed portions at the periphery and scratches on the side, which made continuous tabletting difficult.

Example 10 (Tabletting of sodium dichloroisocyanurate)

Tabletting was performed using the same spherical granules as in Example 1 in a manner similar to Example 9 except that 5% of orthoboric acid was added as a mold release agent. There was no squeak upon releasing the tablets from a mold (mortar) in tabletting. When the outer appearance of tablets obtained was observed, neither collapsed portion at the periphery nor scratches on the side and surface but normal tablets were obtained.

Comparative Example 12 (Tabletting of sodium dichloroisocyanurate granules obtained by the dry method)

To the sodium dichloroisocyanurate granules obtained by the method of Comparative Example 11 was added 5% of orthoboric acid as a mold release agent as in Example 10. Tabletting was performed in a manner similar to Example 9. Squeak was noisy upon release of the tablets from a mold (mortar) in tabletting and when outer appearance of the obtained tablets was observed, the tablets had collapsed portions at the periphery and many vertical scratches on the side. It was diffucult to continue continuous tabletting as in Comparative Example 11.

Example 11 (Tabletting of sodium dichloroisocyanurate)

Tabletting was performed using the same spherical granules as in Example 9 in a manner similar to Example 9. There was some squeak upon releasing the tablets from a mold (mortar) in tabletting but not so noisy as to be a problem. When the appearance of tablets obtained was observed, some collapsed portion was noted at the periphery but no scratches was noted on the side and surface. These were not serious enough to become a problem.

Comparative Example 13 (Tabletting of sodium dichloroisocyanurate granules obtained by the dry method)

The sodium dichloroisocyanurate granules obtained by the method of Comparative Example 11 were tabletted without adding any mold release agent, as in Example 11. Tabletting was performed in a manner similar to Example 9. Squeak was noisy upon release of the tablets from a mold (mortar) in tabletting and when outer appearance of the obtained tablets was observed, the tablets had collapsed portions at the periphery and many vertical scratches on the side. It was difficult to continue continuous tabletting as in Comparative Example 11.

Example 12 (Tabletting of sodium dichloroisocyanurate dihydrate)

Ten kilograms of the spherical granules of sodium dichloroisocyanurate dihydrate obtained in Example 4 were tabletted without adding any mold release agent, as in Example 9. There was no squeak upon releasing the tablets from a mold (mortar) in tabletting. When the appearance of tablets obtained was observed, neither collapsed portion at the periphery nor scratches on the side and surface but normal tablets were obtained.

Comparative Example 14 (Tabletting of sodium dichloroisocyanurate dihydrate granules obtained by the dry method)

9

Sodium dichloroisocyanurate dihydrate powders (passed through 150 mesh) having a water content of 13.6 wt% were treated in a manner similar to Comparative Example 11 to give granules of 990 to 1400μ. Ten kilograms of the granules were tabletted in a manner similar to Example 9. Squeak was somewhat noisy upon release of the tablets from a mold (mortar) in tabletting and when outer appearance of the obtained tablets was observed, the tablets had some collapsed portions at the periphery and few vertical scratches on the side. Further continuous tabletting resulted in increasing the collapsed portions at the periphery and scratches.

Example 13 (Tabletting of trichloroisocyanuric acid)

Ten kilograms of the spherical granules of trichloroisocyanuric acid obtained in Example 6 were tabletted without adding any mold release agent, as in Example 9. There was a little squeak upon releasing the tablets from a mold (mortar) in tabletting. When the outer appearance of tablets obtained was observed, minimized collapsed portion was noted at the periphery and considerably small scratches were noted on the side.

Example 14 (Tabletting of potassium dichloroisocyanurate)

Ten kilograms of the spherical granules of potassium dichloroisocyanurate obtained in Example 7 were tabletted without formulating any mold release agent, as in Example 9. There was some squeak upon releasing the tablets from a mold (mortar) in tabletting. However, when the outer appearance of tablets obtained was observed, tablets having minimized collapsed portion at the periphery and considerably small scratches on the side were obtained.

Example 15 (Tabletting of potassium dichloroisocyanurate)

Ten kilograms of a mixture of the spherical granules of potassium dichloroisocyanurat obtained in Example 7 and 0.2 wt% of sodium stearate as a mold release agent were tabletted, as in Example 9.
There was no squeak upon releasing the tablets from a mold (mortar) in tabletting. When the appearance of tablets obtained was observed, neither collapsed portion at the periphery nor scratches on the side and surface but normal tablets were obtained.

Example 16 (Tabletting of high grade bleaching powders)

Ten kilograms of the spherical granules of high grade bleaching powders obtained in Example 8 were tabletted in a manner similar to Example 9, without adding any mold release agent. There was no squeak upon releasing the tablets from a mold (mortar) in tabletting. When the outer appearance of tablets obtained was observed, neither collapsed portion at the periphery nor scratches on the side and surface but normal tablets were obtained.

Comparative Examples 15 through 17 (Tabletting of the granules obtained by the dry method)

The following solid chlorinating agent powders (passing through 150 mesh) were granulated by the dry granulation method as in Comparative Example 11 to prepare granules of 990 to 1400 μ. Tabletting was carried out in a manner similar to Example 9.
Comparative Example 15: trichloroisocyanuric acid
Comparative Example 16: potassium dichloroisocyanurate
Comparative Example 17: high grade bleaching powders
In any of them, squeak was noisy upon release of the tablets from a mold (mortar) in tabletting and when outer appearance of the obtained tablets was observed, the tablets had collapsed portions at the periphery and many vertical scratches on the side. It was difficult to continue continuous tabletting as in Comparative Example 11.

Evaluation of solubility of tablets

Water of 17 ± 1 °C was continuously sent at a rate of 3 liters/min. into a water tank having a height, width and depth of 400 x 400 x 100 mm and the liquid surface was kept constant by overflow. A stainless metal mesh of 4 mesh was provided at the depth of 50 mm beneath the liquid surface and the tablets of solid chlorinating agents obtained in the examples and comparative examples were put thereon, whereby a solubility of each tablet was measured. Among the solid chlorinating agents, sodium dichloroisocyanurate and a dihydrate thereof were swollen and collapsed in water in a short period of time and therefore, the time period until the dispersed sodium dichloroisocyanurate and dihydrate thereof were completely dissolved (100%) was measured.

On the other hand, in the case of tablets of trichloroisocyanuric acid, potassium dichloroisocyanurate and high grade bleaching powders, they were taken up every determined time, water on the surface of tablet was wiped out and then, the weight was measured. Weights were plotted on time. From the results, a time period until the tablet was dissolved by 50% was measured. The results are shown in Table 2.

As shown in Table 2, the tablets obtained by the method of the present invention showed a faster solubility.

## Table 2

| Tablet | Solid Chlorinating Agent | 50% Dissolution Time | 100% Dissolution Time |
|---|---|---|---|
| Example | | | |
| 11 | DCCNa | – | 21 mins. |
| 12 | DCCNa.2H$_2$O | – | 23 mins. |
| 13 | TCCA | 8.25 hours | – |
| 15 | DCCK | 1.25 hours | – |
| 16 | High grade bleaching powders | 2.8 hours | – |
| Comparative Examples | | | |
| 13 | DCCNa | – | 37 mins. |
| 14 | DCCNa.2H$_2$O | – | 44 mins. |
| 15 | TCCA | 16.5 hours | – |
| 16 | DCCK | 2.75 hours | – |
| 17 | High grade bleaching powders | 5.25 hours | – |

| | |
|---|---|
| DCCNa: | sodium dichloroisocyanurate |
| DCCNa.2H$_2$O | sodium dichloroisocyanurate dihydrate |
| TCCA: | trichloroisocyanuric acid |
| DCCK: | potassium dichloroisocyanurate |

## Claims

1. A method of processing a solid chlorinating agent in the form of a wet cake which comprises the steps of:

   (a) granulating the wet cake by extrusion to form substantially cylindrical granules having a diameter of 0.2 to 5 mm;

(b) granulating the substantially cylindrical granules by tumbling or spheronizing to form substantially spherical granules having a particle size of 0.2 to 5 mm; and

(c) drying the substantially spherical granules.

2. A method of processing a solid chlorinating agent according to claim 1 further comprising the step of forming the spherical dried granules into a tablet.

3. A method of processing a solid chlorinating agent according to claim 1 or claim 2 wherein said solid chlorinating agent is a chlorinated isocyanuric acid compound.

4. A method of processing a solid chlorinating agent according to claim 3 wherein said solid chlorinating agent is at least one compound selected from trichloroisocyanuric acid, dichloroisocyanuric acid, an anhydride or hydrate of sodium dichloroisocyanurate and potassium dichloroisocyanurate.

5. A method of processing a solid chlorinating agent according to claim 3 or claim 4 wherein a bulk density of spherical granules of said chlorinated isocyanuric acid compound is 0.5 to 0.9 $g/cm^3$.

6. A method of processing a solid chlorinating agent according to claim 1 or claim 2 wherein said solid chlorinating agent is high grade bleaching powders.

7. A method of processing a solid chlorinating agent according to claim 6 wherein a bulk density of spherical granules of said high grade bleaching powders is 0.7 to 1.0 $g/cm^3$.

8. A method of processing a solid chlorinating agent according to any preceding claims wherein the water content of said wet cake is 10 to 40 wt%.

**Revendications**

1. Procédé de traitement d'un agent chlorant solide ayant la forme d'une masse humide, comprenant les étapes de :

(a) granulation de la masse humide par extrusion pour former des granules sensiblement cylindriques, de 0,2 à 5 mm de diamètre ;

(b) granulation des granules sensiblement cylindriques en granulateur à tambour ou à plateau, pour former des granules sensiblement sphériques, de granulométrie comprise entre 0,2 et 5 mm ; et

(c) séchage des granules sensiblement sphériques.

2. Procédé de traitement d'un agent chlorant solide selon la revendication 1, comprenant en outre l'étape de transformation des granules sphériques séchés en un comprimé.

3. Procédé de traitement d'un agent chlorant solide selon la revendication 1 ou la revendication 2, dans lequel ledit agent chlorant solide est un composé chloré d'acide isocyanurique.

4. Procédé de traitement d'un agent chlorant solide selon la revendication 3, dans lequel ledit agent chlorant solide est au moins un composé sélectionné parmi l'acide trichloroisocyanurique, l'acide dichloroisocyanurique, un anhydride ou un hydrate de dichloroisocyanurate de sodium et de dichloroisocyanurate de potassium.

5. Procédé de traitement d'un agent chlorant solide selon la revendication 3 ou la revendication 4, dans lequel la densité volumique en vrac des granules sphériques dudit composé chloré d'acide isocyanurique est comprise entre 0,5 et 0,9 $g/cm^3$.

6. Procédé de traitement d'un agent chlorant solide selon la revendication 1 ou la revendication 2, dans lequel ledit agent chlorant solide est constitué par des poudres de blanchiment très concentrées.

7. Procédé de traitement d'un agent chlorant solide selon la revendication 6, dans lequel la densité volumique en vrac des granules sphériques desdites poudres de blanchiment très concentrées est comprise entre 0,7 et 1,0 $g/cm^3$.

8. Procédé de traitement d'un agent chlorant solide selon l'une quelconque des revendications précédentes, dans lequel la teneur en eau de ladite masse humide est comprise entre 10 et 40 % en poids.

**Patentansprüche**

1. Verfahren zur Behandlung eines festen Chlorierungsmittels in Form eines Nasskuchens, umfassend die Schritte:

(a) Granulieren des Nasskuchens durch Extrusion unter Bildung von im wesentlichen zylindrischen Granulen mit einem Durchmesser von 0,2 bis 5 mm;
(b) Granulieren der im wesentlichen zylindrischen Granulen durch Behandeln in einer Trommel oder durch Kugelbildung unter Erhalt von im wesentlichen sphärischen Granulen mit einer Teilchengrösse von 0,2 bis 5 mm; und
(c) Trocknen der im wesentlichen sphärischen Granulen.

2. Verfahren zur Behandlung eines festen Chlorierungsmittels nach Anspruch 1, das weiterhin den Schritt umfasst, die sphärischen, getrockneten Granulen in eine Tablette zu bilden.

3. Verfahren zur Behandlung eines festen Chlorierungsmittels nach Anspruch 1 oder 2, wobei das feste Chlorierungsmittel eine chlorierte Isocyanursäureverbindung ist.

4. Verfahren zur Behandlung eines festen Chlorierungsmittels nach Anspruch 3, wobei das feste Chlorierungsmittel mindestens eine Verbindung aus der Reihe Trichloroisocyanursäure, Dichloroisocyanursäure, Anhydrid oder Hydrat von Natriumdichloroisocyanurat und Kaliumdichloroisocyanurat ist.

5. Verfahren zur Behandlung eines festen Chlorierungsmittels nach Anspruch 3 oder 4, wobei die Schüttdichte der sphärischen Granulen der chlorierten Isocyanursäureverbindung 0,5 bis 0,9 $g/cm^3$ ist.

6. Verfahren zur Behandlung eines festen Chlorierungsmittels nach Anspruch 1 oder 2, wobei das feste Chlorierungsmittel ein hochgradiges Bleichpulver ist.

7. Verfahren zur Behandlung eines festen Chlorierungsmittels nach Anspruch 6, wobei die Schüttdichte der sphärichen Granulen des hochgradigen Bleichpulvers 0,7 bis 1,0 $g/cm^3$ ist.

8. Verfahren zur Behandlung eines festen Chlorierungsmittels nach einem der vorhergehenden Ansprüche, wobei der Wassergehalt des Nasskuchens 10 bis 40 Gew.% ist.